# EUROPÄISCHE PATENTANMELDUNG

(11) **EP 1 750 032 A2**
(43) Veröffentlichungstag der Anmeldung: **07.02.2007**
(21) Anmeldenummer: 06014874.9
(22) Anmeldetag: 18.07.2006
(51) Int. Cl.: F16F 9/54

(54) **Kolbenzylindereinheit**

(30) Priorität: 01.08.2005 DE 102005036595
(71) Anmelder: Stabilus GmbH, D-56070 Koblenz (DE)
(72) Erfinder: Charon, Jean-Noél, 56070 Koblenz (DE); Mintgen, Rolf, 56743 Thuer (DE)
(74) Vertreter: Klein, Thomas

(57) **Zusammenfassung**

Die Erfindung bezieht sich auf eine Kolbenzylindereinheit 1, insbesondere Gasfeder, mit einem Druckrohr 2 und mit einem eine Kolbenstange 4 aufweisenden, in dem Druckrohr 2 axial verschiebbaren Kolben, wobei an dem Druckrohr 2 ein Druckrohranschlußelement 9 zur externen Verbindung der Kolbenzylindereinheit 1 und an der Kolbenstange 4 ein Kolbenstangenanschiußelement 11 zur externen Verbindung der Kolbenzylindereinheit 1 vorgesehen ist. Für eine an die jeweiligen Einbauverhältnisse angepaßte Einbaubarkeit der Kolbenzylindereinheit 1 wird vorgeschlagen, daß das Kolbenstangenanschlußelement 11 mit der Kolbenstange 4 und/oder das Druckrohranschlußelement 9 mit dem Druckrohr 2 in Axialrichtung längenverstellbar verbunden ist.

## Beschreibung

Die Erfindung bezieht sich auf eine Kolbenzylindereinheit, insbesondere Gasfeder, mit einem Druckrohr und mit einem eine Kolbenstange aufweisenden, in dem Druckrohr axial verschiebbaren Kolben, wobei an dem Druckrohr ein Druckrohranschlußelement zur externen Verbindung der Kolbenzylindereinheit und an der Kolbenstange ein Kolbenstangenanschlußelement zur externen Verbindung der Kolbenzylindereinheit vorgesehen ist.

Beispielsweise ist eine solche Kolbenzylindereinheit in Form einer Gasfeder zum Bewegen von Klappen oder schweren Gegenständen bekannt. Mit der Gasfeder können Lasten gehoben, gesenkt und festgestellt werden. Die Gasfeder ist ein hydropneumatisches Verstellelement mit einem zylindrischen Druckrohr, einem Kolben mit einer Kolbenstange sowie geeigneten Anschlüssen zum Einbau der Gasfeder. Für den Einbau der Gasfeder weisen die Anschlüsse Anschlußelemente zur externen Verbindung der Gasfeder, das heißt zur Verbindung der Gasfeder mit Bauteilen, mit denen sie zusammenwirkt, auf. Zum Beispiel kann ein Druckrohranschlußelement der Gasfeder mit einer Karosserie eines Personenkraftwagens und ein Kolbenstangenanschlußelement der Gasfeder mit einer Heckklappe des Personenkraftwagens verbunden werden, so daß die Gasfeder ein Öffnen und gegebenenfalls ein Feststellen der Heckklappe unterstützt.

Abhängig von den geometrischen Einbauerfordernissen und den kinematischen Notwendigkeiten des jeweiligen Einsatzfalles muß eine speziell daran angepaßte Gasfeder gefertigt werden. Das gestaltet zum einen die Fertigung von Gasfedern aufwendig und erfordert zum anderen eine kostspielige Lagerhaltung, die zum Beispiel Gasfedern unterschiedlichster Kolbenstangenlängen zu berücksichtigen hat.

Der vorliegenden Erfindung liegt ausgehend vom Stand der Technik die Aufgabe zugrunde, eine Kolbenzylindereinheit der eingangs genannten Art zu schaffen, die auf einfache Weise an unterschiedliche Einbauverhältnisse anpaßbar ist.

Diese Aufgabe wird erfindungsgemäß dadurch gelöst, daß bei einer Kolbenzylindereinheit der eingangs genannten Art das Kolbenstangenanschlußelement mit der Kolbenstange und/oder das Druckrohranschlußelement mit dem Druckrohr in Axialrichtung längenverstellbar verbunden ist.

Erfindungsgemäß ist es somit ermöglicht, durch eine Längenverstellung in Axialrichtung, also in Richtung der Mittelachse der Kolbenzylindereinheit, unmittelbar an der Kolbenzylindereinheit den Abstand zwischen Kolbenstangenanschlußelement und Druckrohranschlußelement zu verändern und an die jeweiligen Einbauerfordernisse anzupassen. Es ist mit der Erfindung nicht mehr erforderlich, je nach Einbauerfordernis spezielle Kolbenzylindereinheiten - beispielsweise durch Auswahl einer Kolbenstange einer bestimmten Länge oder durch Anpassung des Druckrohres - anzufertigen und/oder solche speziellen Kolbenzylindereinheiten in einem Lager vorzuhalten. Dadurch führt die Erfindung nicht nur zu einer erheblichen Kostenreduzierung in der Fertigung, sondern auch in der Lagerhaltung durch Niedrighalten des Lagerbestandes. Zudem können auch für selten vorkommende Einbauerfordernisse unmittelbar Kolbenzylindereinheiten verfügbar sein, da nicht erst auf Bestellung eine Fertigung solcher Kolbenzylindereinheiten in die Wege geleitet zu werden braucht und folglich Vorlaufzeiten für die Fertigung und die Fertigungszeit selbst für den Besteller nicht mehr abgewartet werden müssen. Ein weiterer erheblicher Vorteil der Erfindung besteht darin, daß auch nach dem Einbau der Kolbenzylindereinheit eine erneute Justage der Kolbenzylindereinheit vorgenommen werden kann und so zum Beispiel während des Betriebes auftretende Maßänderungen ausgeglichen werden können. Damit wird die Betriebssicherheit und die Dauerhaltbarkeit der Kolbenzylindereinheit vorteilhaft erhöht. Allgemein kann mit der Erfindung vorteilhaft bereits beim Einbau der Kolbenzylindereinheit ein Toleranzausgleich vorgenommen werden. Vorzugsweise ist die Kolbenzylindereinheit eine Gasfeder, die neben einer hohen Betriebstauglichkeit und Haltbarkeit insbesondere die Vorteile der Möglichkeit einer gesteuerten Bewegungsgeschwindigkeit, gedämpfter Endlagen, einfacher Montierbarkeit, kompakter Abmessungen und einer flachen Federkennlinie bieten kann. Bei dem Kolbenstangenanschlußelement und dem Druckrohranschlußelement handelt es sich vorzugsweise jeweils um einen Schwenkbolzen; das Kolbenstangenanschlußelement und/oder das Druckrohranschlußelement könnte grundsätzlich aber zum Beispiel auch einen Kugelkopf für ein Kugelgelenk aufweisen.

Man könnte sich vorstellen, daß beispielsweise mittels einer Keil- und/oder Klemmvorrichtung die axiale Längenverstellung bewirkbar ist. Gemäß einer vorteilhaften Weiterbildung der Erfindung ist hingegen die axiale Länge der Kolbenzylindereinheit besonders fein einstellbar bei gleichzeitig hoher mechanischer Stabilität der Kolbenzylindereinheit, wenn die Kolbenstange mittels einer axialen Kolbenstangenverschraubung mit dem Kolbenstangenanschlußelement verbunden ist.

Der Vorteil der exakten Längeneinstellbarkeit bei hoher mechanischer Stabilität ergibt sich auch, wenn gemäß einer anderen Weiterbildung der Erfindung das Druckrohr mittels einer axialen Druckrohrverschraubung mit dem Druckrohranschlußelement verbunden ist.

Gemäß einer anderen vorteilhaften Weiterbildung der Erfindung weist die Kolbenstange ein Außengewinde für die Kolbenstangenverschraubung auf, wodurch unter anderem die Herstellung der Kolbenzylindereinheit weiter vereinfacht werden kann.

Es ist denkbar, das Druckrohr unmittelbar in die Druckrohrverschraubung einzubeziehen. Jedoch kann die Druckrohrverschraubung in ihren Abmessungen gering gehalten werden, wenn gemäß einer anderen vorteilhaften Weiterbildung der Erfindung das Druckrohr einen Axialansatz mit einem Außengewinde für die Druckrohrverschraubung aufweist.

Gemäß einer anderen vorteilhaften Weiterbildung der Erfindung ist das Außengewinde der Kolbenstange ein selbstschneidendes Gewinde, und/oder es ist das Außengewinde des Axialansatzes des Druckrohres ein selbstschneidendes Gewinde. Das bedeutet, daß in besonders einfacher Weise das Außengewinde der Kolbenstange ein Innengewinde des Kolbenstangenanschlußelementes selbstschneidend in eine Ausnehmung des Kolbenstangenanschlußelementes eingeschraubt sein kann und/oder das Außengewinde des Axialansatzes des Druckrohres ein Innengewinde des Druckrohranschlußelementes selbstschneidend in eine Ausnehmung des Druckrohranschlußelementes eingeschraubt sein kann. Es ist somit nicht erforderlich, das Kolbenstangenanschlußelement oder das Druckrohranschlußelement oder gegebenenfalls den Anschlußelementen zugehörige Verbindungselemente mit einem Gewinde für die jeweilige Verschraubung zu versehen. Eine andere übliche Bezeichnung für ein selbstschneidendes Gewinde ist selbstformendes Gewinde.

Für eine hohe Stabilität und Steifigkeit ist es - insbesondere auch wenn ein selbstschneidendes Gewinde vorgesehen ist - von besonderem Vorteil, wenn gemäß einer anderen Weiterbildung der Erfindung die Kolbenstange und/oder der Axialansatz des Druckrohres aus einem Metall besteht.

Gemäß einer anderen vorteilhaften Weiterbildung der Erfindung besteht das Kolbenstangenanschlußelement und/oder das Druckrohranschlußelement aus einem Kunststoff, wodurch günstige Gleit- und Schmiereigenschaften bei kostengünstiger Herstellbarkeit erreicht werden können. Zudem ergibt sich bei einer Einschraubung eines Gewindes in ein Kunststoffmaterial der Vorteil einer Sicherung infolge Reibung.

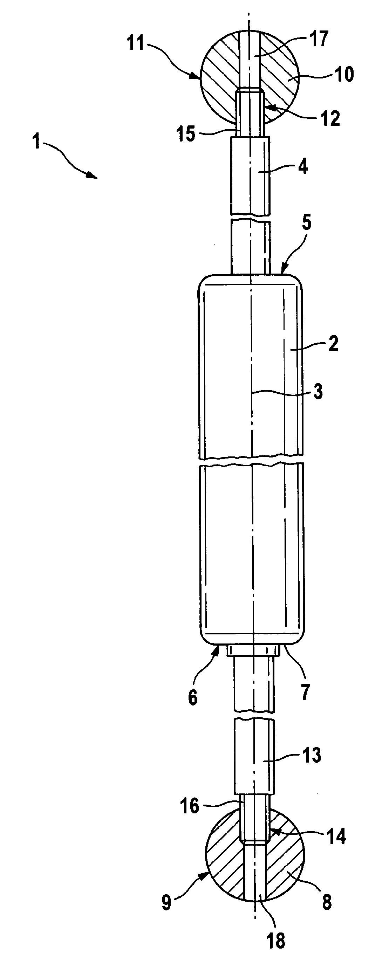

Ein Ausführungsbeispiel der Erfindung ist in der Zeichnung schematisiert dargestellt und wird im Folgenden näher erläutert. Es zeigt die
- einzige Figur:: eine Kolbenzylindereinheit in einer Seitenansicht.

In der einzigen Figur ist eine als Gasfeder ausgebildete Kolbenzylindereinheit 1 mit einem Druckrohr 2 dargestellt. In dem Druckrohr 2 ist ein Kolben angeordnet, der axial, somit in Richtung der Mittelachse 3 der Kolbenzylindereinheit 1, in dem Druckrohr 2 verschiebbar ist. Der Kolben weist in diesem Ausführungsbeispiel eine einseitige Kolbenstange 4 auf, die an einer Stirnseite 5 des Druckrohres 2 aus diesem herausgeführt ist.

An der gegenüberliegenden Stirnseite 6 weist das Druckrohr 2 einen Boden 7 auf und ist vollständig verschlossen. Es ist auch denkbar, anstelle der einseitigen Kolbenstange 4 eine zweiseitige Kolbenstange vorzusehen, die dann an beiden Stirnseiten des Druckrohres aus diesem herausgeführt ist.

Für ihren Einbau weist die Kolbenzylindereinheit 1 einerseits an dem Druckrohr 2 ein hier als Schwenkbolzen 8 ausgebildetes Druckrohranschlußelement 9 zur externen Verbindung der Kolbenzylindereinheit 1 und andererseits an der Kolbenstange 4 ein hier ebenfalls als Schwenkbolzen 10 ausgebildetes Kolbenstangenanschlußelement 11 zur externen Verbindung der Kolbenzylindereinheit 1 auf. Die beiden Schwenkbolzen 8, 10 bestehen in diesem Beispiel aus einem Kunststoff.

Die Kolbenstange 4 ist mittels einer axialen Kolbenstangenverschraubung 12 mit dem Kolbenstangenanschlußelement 11 in Axialrichtung, das heißt in Richtung der Mittelachse 3 der Kolbenzylindereinheit 1, längenverstellbar verbunden. Das Druckrohr 2 ist über einen an dem Boden 7 des Druckrohres 2 angeordneten Axialansatz 13 mittels einer axialen Druckrohrverschraubung 14 mit dem Druckrohranschlußelement 9 in Axialrichtung längenverstellbar verbunden.

Sowohl die Kolbenstange 4 als auch der Axialansatz 13, die in diesem Beispiel beide aus einem Metall bestehen, weisen in ihrem jeweiligen dem Druckrohr 2 abgewandten, freien Endbereich ein selbstschneidendes Außengewinde 15, 16 auf, und zwar einerseits für die Kolbenstangenverschraubung 12 und andererseits für die Druckrohrverschraubung 14.

Mittels des selbstschneidenden Außengewindes 15 der Kolbenstange 4 ist die Kolbenstange 4 in eine Ausnehmung 17 des Kolbenstangenanschlußelementes 11 das Gewinde der Kolbenstangenverschraubung 12 bildend eingeschraubt. In gleicher Weise ist mittels des selbstschneidenden Außengewindes 16 des Axialansatzes 13 das Druckrohr 2 mit dem Axialansatz 13 in eine Ausnehmung 18 des Druckrohranschlußelementes 9 das Gewinde der Druckrohrverschraubung 14 bildend eingeschraubt.

Die in diesem Ausführungsbeispiel beschriebene Kolbenzylindereinheit 1 mit Schwenkbolzen 8, 10 eignet sich besonders zum Einbau in ein Scharnier, zum Beispiel ein Heckklappenscharnier eines Personenkraftwagens. Nach dem Einbau der Kolbenzylindereinheit 1 in das Scharnier kann der Scharnierwinkel durch entsprechendes Einschrauben der Kolbenstange 4 in den zugehörigen Schwenkbolzen 10 und/oder des Druckrohres 2 in den zugehörigen Schwenkbolzen 18 exakt eingestellt werden.

### Bezugszeichenliste

- 1: Kolbenzylindereinheit
- 2: Druckrohr
- 3: Mittelachse
- 4: Kolbenstange
- 5: Stirnseite
- 6: Stirnseite
- 7: Boden
- 8: Schwenkbolzen
- 9: Druckrohranschlußelement
- 10: Schwenkbolzen
- 11: Kolbenstangenanschlußelement
- 12: Kolbenstangenverschraubung
- 13: Axialansatz
- 14: Druckrohrverschraubung
- 15: Außengewinde
- 16: Außengewinde
- 17: Ausnehmung
- 18: Ausnehmung

## Patentansprüche

1. Kolbenzylindereinheit, insbesondere Gasfeder, mit einem Druckrohr und mit einem eine Kolbenstange aufweisenden, in dem Druckrohr axial verschiebbaren Kolben, wobei an dem Druckrohr ein Druckrohranschlußelement zur externen Verbindung der Kolbenzylindereinheit und an der Kolbenstange ein Kolbenstangenanschlußelement zur externen Verbindung der Kolbenzylindereinheit vorgesehenist,**dadurch gekennzeichnet, daß** das Kolbenstangenanschlußelement (11) mit der Kolbenstange (4) und/oder das Druckrohranschlußelement (9) mit dem Druckrohr (2) in Axialrichtung längenverstellbar verbunden ist.

2. Kolbenzylindereinheit nach Anspruch 1, **dadurch gekennzeichnet, daß** die Kolbenstange (4) mittels einer axialen Kolbenstangenverschraubung (12) mit dem Kolbenstangenanschlußelement (11) verbunden ist.

3. Kolbenzylindereinheit nach einem der Ansprüche 1 und 2, **dadurch gekennzeichnet, daß** das Druckrohr (2) mittels einer axialen Druckrohrverschraubung (14) mit dem Druckrohranschlußelement (9) verbunden ist.

4. Kolbenzylindereinheit nach einem der vorhergehenden Ansprüche, **dadurch gekennzeichnet, daß** die Kolbenstange (4) ein Außengewinde (15) für die Kolbenstangenverschraubung (12) aufweist.

5. Kolbenzylindereinheit nach einem der vorhergehenden Ansprüche, **dadurch gekennzeichnet, daß** das Druckrohr (2) einen Axialansatz (13) mit einem Außengewinde (16) für die Druckrohrverschraubung (14) aufweist.

6. Kolbenzylindereinheit nach einem der Ansprüche 4 und 5, **dadurch gekennzeichnet, daß** das Außengewinde (15) der Kolbenstange (4) ein selbstschneidendes Gewinde ist und/oder daß das Außengewinde (16) des Axialansatzes (13) des Druckrohres (2) ein selbstschneidendes Gewinde ist.

7. Kolbenzylindereinheit nach einem der vorhergehenden Ansprüche, **dadurch gekennzeichnet, daß** die Kolbenstange (4) und/oder der Axialansatz (13) des Druckrohres (2) aus einem Metall besteht.

8. Kolbenzylindereinheit nach einem der vorhergehenden Ansprüche, **dadurch gekennzeichnet, daß** das Kolbenstangenanschlußelement (11) und/oder das Druckrohranschlußelement (9) aus einem Kunststoff besteht.
